# EUROPÄISCHE PATENTANMELDUNG

(11) **EP 2 918 774 A1**
(43) Veröffentlichungstag der Anmeldung: **16.09.2015**
(21) Anmeldenummer: 15152176.2
(22) Anmeldetag: 22.01.2015
(51) Int. Cl.: F01D 5/00, F01D 5/28, F01D 5/18

(54) **VERFAHREN ZUR NEUHERSTELLUNG VON DURCHGANGSLÖCHERN IN EINEM SCHICHTSYSTEM**

(30) Priorität: 14.03.2014 DE 102014204806
(71) Anmelder: Siemens Aktiengesellschaft, 80333 München (DE)
(72) Erfinder: Basdere, Bahadir, 12109 Berlin (DE); Felkel, Diana, 13158 Berlin (DE); Massa, Andrea, 12157 Berlin (DE); Wilkenhöner, Rolf, 14532 Kleinmachnow (DE); Wollnik, Adrian, 14624 Dallgow-Döberitz (DE)

(57) **Zusammenfassung**

Durch die Vorabeinbringung eines Durchgangslochs in ein Substrat (4) vor der Beschichtung und der Entfernung danach werden die Bearbeitungszeiten zur Herstellung eines Durchgangslochs (18) mit Diffusor (13) verkürzt und dadurch auch die Zwischenschichten weniger belastet.

## Beschreibung

Die Erfindung betrifft das Herstellen von Durchgangslöchern in einem Schichtsystem.

Turbinenschaufeln der ersten und zweiten Reihe werden bei sehr hohen Temperaturen eingesetzt und zum Schutz vor Oxidation und Korrosion sowie Wärme mit metallischen und/oder thermischen Schichten versehen.
Insbesondere Turbinenschaufeln weisen noch zusätzlich Kühlluftlöcher auf, aus denen Kühlluft herausströmt.

Die Grenzflächen von Schichten untereinander und zum Substrat können Ursache für Rissinitierung darstellen.
Diese Kühlluftlöcher weisen an ihrer Oberfläche an der äußersten Schicht einen Diffusor auf, damit sich eine schützende Luftschicht über die Oberfläche der Turbinenschaufel legt. Da der Diffusor eine Verbreiterung des zylindrischen unteren Anteils darstellt muss sehr viel Material abgetragen werden.

Es ist daher Aufgabe der Erfindung ein Verfahren aufzuzeigen, mit dem Grenzflächen bei der Bearbeitung weniger belastet werden.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Durch das Verfahren kann die Zwischenschichtanbindung der Schichten untereinander und/oder mit dem Substrat wird deutlich geringer belastet und können Durchgangslöcher schneller hergestellt werden.

Es zeigen:
- Figur 1, 2: ein Verfahren aus dem Stand der Technik für die Herstellung von Diffusoren,
- Figur 3, 4, 5: ein erfindungsgemäßes Verfahren,
- Figur 6: eine Liste von Superlegierungen und
- Figur 7: eine Turbinenschaufel.

Die Figuren und die Beschreibung stellen nur Ausführungsbeispiele der Erfindung dar.

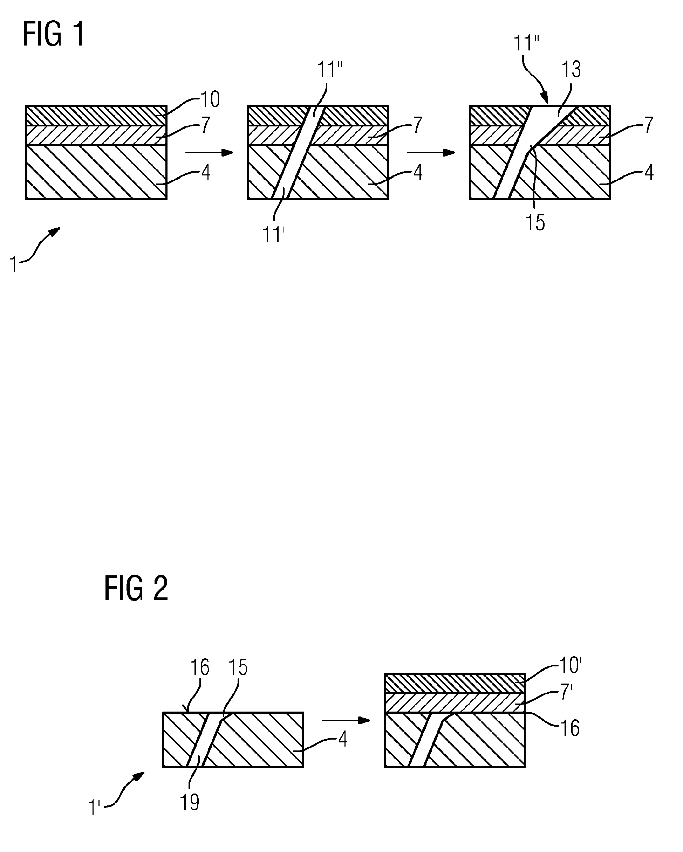

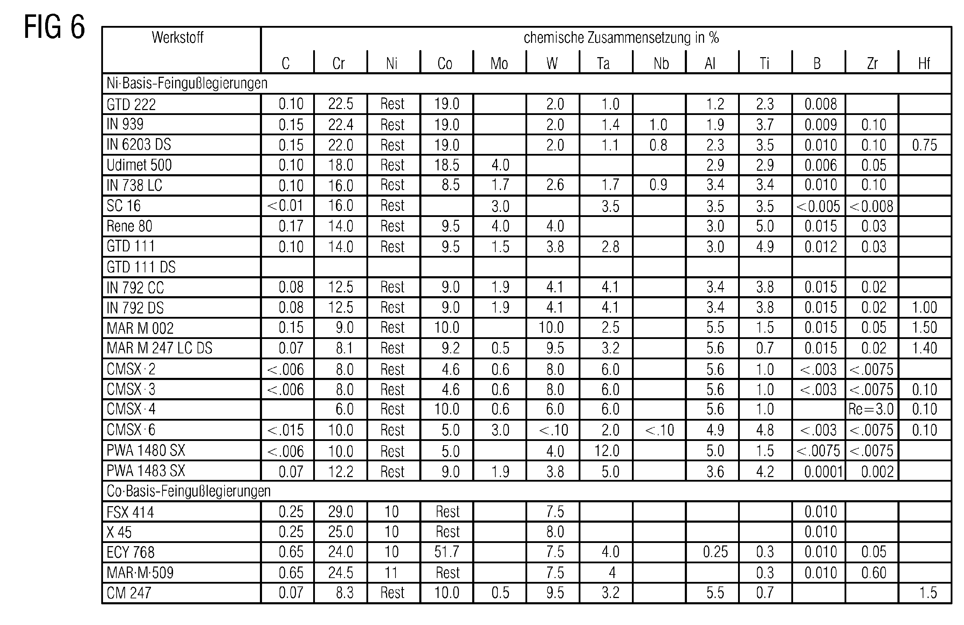

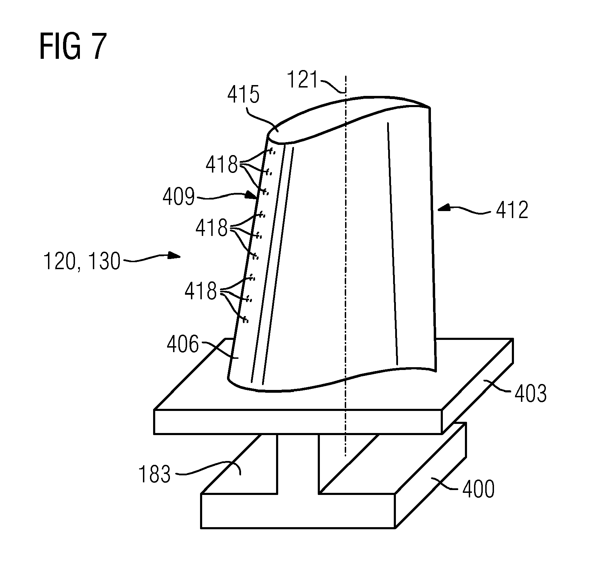

In Figur 1 ist ein Schichtsystem 1 und ein Herstellungsverfahren nach dem Stand der Technik gezeigt, dass ein Substrat 4 mit einer optionalen inneren Schicht 7 und einer äußersten keramischen Schicht 10 aufweist.
Dies ist bei Turbinenschaufeln 120, 130 (Fig. 7) ein metallisches Substrat 4, insbesondere eine nickel- oder kobaltbasierte Legierung, ganz insbesondere gemäß Figur 6, mit einer optionalen metallischen Haftvermittlerschicht (MCrAlX) mit einer optional vorhandenen Aluminiumoxidschicht darauf und der äußersten keramischen Schicht 10.

Zur Herstellung eines Diffusors 13 wird zuerst insbesondere ein zylindrisches Loch 11', 11" durch die Schichten 7, 10 und durch das Substrat 4 erzeugt.

Der Querschnitt des Lochs 11', 11" kann auch eine andere Geometrie aufweisen, aber zumindest ist er über die gesamte Länge nach dem ersten Herstellungsschritt über die Tiefe gesehen konstant.

Ein oberer Teil 11" des Durchgangslochs 11', 11" wird im Bereich der Schichten 7, 10 und vorzugsweise im Bereich des Substrats 4 verbreitert, so dass ein Diffusor 13 entsteht, wie er rechts in Figur 1 dargestellt ist. Der Diffusor 13 kann auch einen Diffusoranteil 15 im Substrat 4 aufweisen. Figur 2 zeigt ein Bauteil 1' nach einem Einsatz und nachdem Schichten entfernt wurden.
Eine nach Figur 1 hergestellte Turbinenschaufel 120, 130 kann nach dem Einsatz gemäß dem Stand der Technik wieder verwendet werden, wobei zuerst die Schichten 7, 10 entfernt werden, das Substrat 4 inspiziert und ggf. überarbeitet wird und dann neue Schichten 7, 10 aufgebracht werden.
Das Substrat 4 weist daher schon an seiner Oberfläche 16 den Diffusoranteil 15 des Durchgangslochs 19 auf, das von der erstmaligen Herstellung des Diffusors 13 (Fig. 1) herrührt.

Dann werden Schichten 7', 10' aufgebracht, die sich auch in dem Bereich des Diffusors niederschlagen (hier im Bereich 15). Dann wird der Overspray entfernt oder es werden geeignete Maßnahmen getroffen, um das Loch 10 durch Stopfen zu schützen, die nach dem Beschichten entfernt werden und der Diffusor 13 entsprechend seiner Endgeometrie geformt wird.

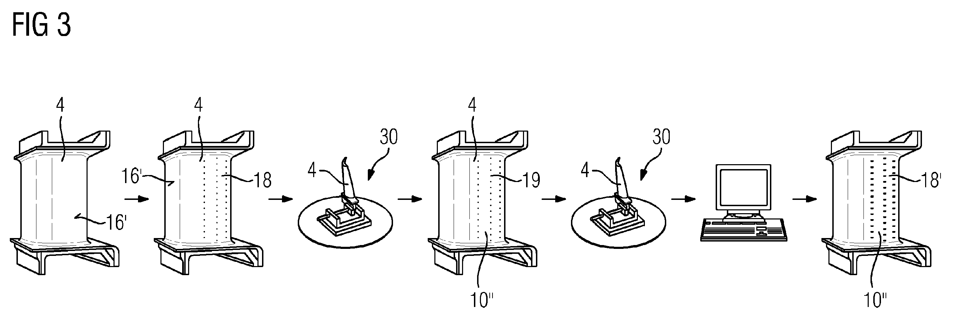

Die Figur 3 zeigt einen erfindungsgemäßen Ablauf.
Das Substrat 4, insbesondere der Turbinenschaufel 120, 130, wird neu hergestellt, insbesondere gegossen (Fig. 3 ganz links).

In einem zweiten Schritt werden Durchgangslöcher 18 in das Substrat 4 eingebracht.
Die Durchgangslöcher 18 weisen an der äußeren Oberfläche 16' noch keinen Diffusor auf, falls ein solcher hergestellt werden soll, und weisen insbesondere einen konstanten Querschnitt über ihre Tiefe, insbesondere eine zylindrische Form auf.

Optional im Zwischenschritt erfolgt eine Bestrahlung des durchbohrten Substrats 4 mit Material, insbesondere mit Sand, Siliziumkarbidkegeln (SiC) oder Stahlkugeln (nicht dargestellt).
Dies dient zur Aktivierung für eine folgende Beschichtung und auch zum Entgraten der gebohrten Durchgangslöcher 18.

In einem weiteren Schritt in einem ersten Scan mittels einer Scanvorrichtung 30 wird die Lage und Ausrichtung der Durchgangslöcher 18 und damit das eines Lochmusters bestimmt und insbesondere abgespeichert.

Danach erfolgt die Beschichtung mit einer optionalen metallischen Haftvermittlerschicht 7", insbesondere einer MCrAlX (M= Ni, Co; X = Y, Ta, Re, Si und/oder Fe) und einer äußeren keramischen Schicht 10".
Vorzugsweise wird zuerst eine metallische Beschichtung 7", insbesondere mittels LVPS, HVOF, APS, aufgebracht.

Optional findet ein Öffnen, insbesondere ein manuelles Öffnen, ganz insbesondere mit einer Diamantpfeile, der beschichteten Löcher 19 und Entfernen von metallischem Material statt (nicht dargestellt).

Danach erfolgt die keramische Beschichtung 10", insbesondere mittels APS.

Dabei sind dann auch die Löcher 19 zumindest teilweise oder vollständig beschichtet.

Danach erfolgt ein zweiter Scan, bei dem die Löcher 19 an der Oberfläche des beschichteten Substrats 4 detektiert und erfasst werden und durch einen Datenabgleich mit dem ersten Scan oder durch ein weiteres Prüfverfahren die Lage und Ausrichtung der Löcher 18, 19 erfasst wird.

Danach wird keramisches Material aus dem Durchgangsloch 18 mittels eines Lasers entfernt. Damit werden Durchgangslöcher ohne Diffusor hergestellt.

Vorzugsweise wird in derselben Vorrichtung ein äußerer Diffusor 13' erstmalig erzeugt, der eine Verbreiterung des Querschnitts des Durchgangslochs 18 insbesondere in den Schichten 7", 10" darstellt. Dies kann in einem weiteren Bearbeitungsschritte oder in einem Arbeitsgang mit der Entfernung von keramischem Material erfolgen.

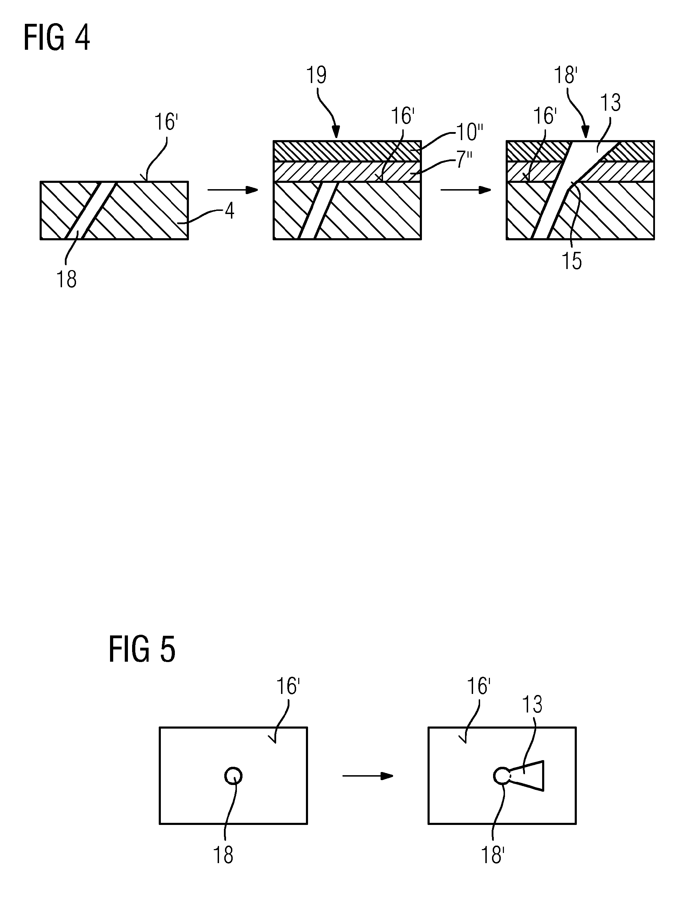

In Figur 4 ist ein erfindungsgemäßes Verfahren zur Neuherstellung eines Durchgangslochs 18' mit Diffusor 13 verkürzt dargestellt.
In das Substrat 4 wird ein Durchgangsloch 18 hergestellt, das insbesondere rotationssymmetrisch ist oder über seine Tiefe gesehen einen konstanten Querschnitt aufweist. Dies kann durch EDM oder Laserbearbeitung erfolgen.

Das Substrat 4 weist aber im Bereich seiner Oberfläche 16' keine Verbreiterung auf wie beim wiederaufbereiteten (Refurbishment) Bauteil 1' gemäß Figur 2.

Erst dann werden Schichten 7" (metallisch, ganz vorzugsweise MCrAlX) und 10" (Keramik) aufgebracht.

Das Material der Schichten 7", 10" dringt in das Loch 18 ein.

Dann wird zumindest das keramische Material aus dem Durchgangsloch 19 entfernt.
Vorzugsweise wird dann durch diese Schichten 7", 10" der Diffusor 13 erzeugt und erstmalig wird noch ein Diffusoranteil 15 des Diffusors 13 im Substrat 4 erzeugt, also Material des Substrats 4 für den Diffusor 13 abgetragen.

Dies erfolgt vorzugsweise durch Laserbearbeitung.

Eine Aufsicht auf die Oberfläche 16' ist in Figur 5 gezeigt. Links ist der ursprüngliche Verlauf (gemäß Figur 3 ganz links) des Durchgangslochs 18 an der Oberfläche 16' vor der Verbreiterung (Fig. 5 rechts) zur Herstellung des Diffusors 13.

Das Durchgangsloch 18 wird vorzugsweise mit Pulsdauern im Millisekundenbereich hergestellt, insbesondere mit Pulsdauern ≥ 1ms.

Der Diffusor 13 oder zumindest die Entfernung der keramischen Schichten und des Teils 15 wird mit Pulsdauern im Nanosekundenbereich oder Subnanosekundenbereich, insbesondere kleiner gleich 800ns, ganz insbesondere kleiner gleich 600ns, hergestellt.

Ein solches Bauteil 1, 120, 130 weist vorzugsweise eine nickel- oder kobaltbasierte Superlegierung auf, insbesondere gemäß Figur 6, und stellt vorzugsweise eine Turbinenschaufel 120, 130 gemäß Figur 7 dar.

Eine technische Herausforderung bei dieser neuen Prozesskette ist es, die bereits eingebrachten Kühlluftbohrungen für das anschließende Lasershapen und/oder Laserwiederöffnen der Kühlluftbohrungen mit einer derartigen Präzision zu lokalisieren, so dass es nicht zu einem inakzeptablen Versatz zwischen den Durchgangsbohrungen und den Trichtern der Filmkühlbohrungen kommt. Derzeit werden mindestens zwei Möglichkeiten gesehen, dieses Wiederfinden zu ermöglichen:
1) Manuelles Einrichten vor dem Lasershapen, insbesondere durch Anfahren aller oder wahlweise einer gewissen Anzahl an Bohrungen je Bohrungsreihe oder Bohrungsmuster mit einem Kamerasystem. Dabei werden die Bohrkoordinaten der angefahren Löcher aufgenommen, sowie - falls erforderlich - die Koordinaten der übrigen Locher durch Interpolation bestimmt.
2) Vermessen des Bohrmusters und Übertrag der Bohrkoordinaten an den Lasershaper. Dies kann vorzugsweise mittels Streifenlichtprojektion erfolgen. Dazu wird die Schaufelgeometrie nach dem Bohren der zylindrischen Bohrungen sowie nach dem Beschichten gemessen. Durch einen Best-Fit Ansatz werden aus diesen beiden Messungen sowohl die Bohrlochkoordinaten als auch die Bohrungswinkel ermittelt und an den Lasershaper übergeben. Mit Hilfe dieser Daten wird dann das Bohrprogramm für das Lasershapen / Laserwiederöffnen erstellt.

Der erfinderische Schritt liegt einerseits darin, dass die zylindrischen Durchgangsbohrungen 18 vor dem Aufbringen der keramischen Wärmedämmschichten 10" eingebracht werden, so dass die Wärmedämmschicht nicht durch den Einbringungsprozess geschädigt wird. Es werden lediglich mittels Lasershapen bei deutlich verringerter Energie die trichterförmigen Kühlluftbohrungen 19 eingebracht, und - falls erforderlich - keramischer Coatdown aus den Durchgangsbohrungen 19 entfernt.

Ein weiterer erfinderischer Schritt liegt darin, dass das reale Bohrungsmuster durch eine Vermessung ermittelt wird, insbesondere durch Geometriebestimmung vor und nach dem Beschichten. Die tatsachliche Lage und der Winkel jeder einzelnen Durchgangslöcher 18 werden an den Lasershaper übergeben, so dass es keinen inakzeptablen Versatz zwischen der Durchgangsbohrung und dem Filmkühltrichter gibt. Auch mögliche fertigungstechnische Diskrepanzen zwischen dem 3D-Modell und der realen Lage der Bohrungen sind so erfasst und berücksichtigt.

Weitere erfinderische Schritte liegen darin, die Aktivierungsbehandlung vor dem Beschichten (Sandstrahlen) auch zur Reinigungs- und Entgratung nach dem Laserbohren einzusetzen.

## Patentansprüche

1. Verfahren
zur Neuherstellung von Durchgangslöchern (18') in ein Schichtsystem aus metallischem Substrat (4) und zumindest einer Schicht (7", 10"),
insbesondere von Durchgangslöchern (18') mit einem äußeren Diffusor (13),
bei dem zuerst das Substrat (4) hergestellt wird, insbesondere gegossen wird,
dann in das Substrat (4) vor der ersten Beschichtung zumindest ein Durchgangsloch (18) mit einem Querschnitt, insbesondere mit einem konstantem Querschnitt über die gesamte Dicke des Substrats (4),
eingebracht wird,
dass optional eine Materialbestrahlung,
insbesondere Sandstrahlen oder Kugelstrahlen,
durchgeführt wird,
Scannen und Abspeichern eines Lochmusters der Durchgangslöcher (18) in einem ersten Scan mittels einer Scanvorrichtung (30),
bei dem das Substrat (4) erst dann beschichtet wird mit einer inneren metallischen Schicht (7") und/oder einer äußeren keramischen Schicht (10"),
optionales Entfernen von insbesondere metallischem Material aus dem Durchgangsloch (19) im Substrat (4) vor dem Aufbringen der keramischen Schicht (10"),
Scannen und Abspeichern eines Lochmusters der beschichteten Durchgangslöcher (19) in einem zweiten Scan,
wobei aufgrund des ersten Scans und des zweiten Scans die Durchgangslöcher (18) identifiziert werden und/oder auch die Ausrichtung und Lage der Durchgangslöcher (18) bestimmt wird,
wobei die Ausrichtung und Lage der Durchgangslöcher (18) optional durch ein separates Messverfahren erfolgen kann, dass dann zumindest keramisches Material aus dem Durchgangsloch (18) entfernt wird zur Fertigstellung des zumindest einen Durchgangslochs (18'),
optional in einem weiteren Bearbeitungsschritt oder in dem selben Arbeitsgang ein Diffusor (13) in die Schichten (7", 10") und optional ein Diffusoranteil (15) in das Substrat (4) zur Fertigstellung des zumindest einen Durchgangslochs (18') mit Diffusor (13).

2. Verfahren nach Anspruch 1,
bei dem ein Durchgangsloch (18') ohne Diffusor erzeugt wird,
insbesondere ein zylindrisches Durchgangsloch (18').

3. Verfahren nach Anspruch 1,
bei dem ein Diffusor (13) erzeugt wird.

4. Verfahren nach einem oder mehreren der Ansprüche 1, 2 oder 3,
bei dem die Entfernung von Material aus dem Durchgangsloch (19) im Substrat (4) vor dem zweiten Scan erfolgt.

5. Verfahren nach Anspruch 4,
bei dem das Entfernen von Material manuell erfolgt.

6. Verfahren nach einem oder mehreren der Ansprüche 1, 3, 4 oder 5,
wobei erstmalig für den Diffusor (13) zusätzliches Material in einem Diffusoranteil (15) des Substrats (4) entfernt wird,
wobei der Diffusoranteil (15) eine Verbreiterung des Durchgangslochs (18') an der Oberfläche (16') des Substrats (4) darstellt,
und insbesondere wobei der Diffusor (13) eine unsymmetrische Verbreiterung des oberen Teils des Durchgangslochs (18') darstellt.

7. Verfahren nach einem oder mehreren der Ansprüche 1, 2, 3, 4, 5 oder 6,
bei dem ein metallisches Substrat (4) bearbeitet wird.

8. Verfahren nach einem oder mehreren der Ansprüche 1, 2, 3, 4, 5, 6 oder 7,
bei dem zumindest eine innere metallische Schicht (7") vorhanden ist.

9. Verfahren nach einem oder mehreren der Ansprüche 1, 2, 3, 4, 5, 6, 7 oder 8,
bei dem ein Laserabtragungsverfahren verwendet wird, insbesondere unter Verwendung von deutlich unterschiedlichen,
insbesondere mindestens 20% unterschiedlichen Pulsfrequenzen für die Herstellung des Durchgangslochs (18') und des Diffusors (13) oder der Entfernung von keramischen Material aus dem Durchgangsloch (18').

10. Verfahren nach einem oder mehreren der vorherigen Ansprüche 1, 2, 3, 4, 5, 6, 7, 8 oder 9,
bei dem das Durchgangsloch (18') mit Pulsdauern im Millisekundenbereich hergestellt wird,
insbesondere größer gleich 1ms.

11. Verfahren nach einem oder mehreren der vorherigen Ansprüche 1 oder 3 bis 10,
bei dem der Diffusor (13) oder zumindest die Entfernung von keramischem Material aus dem Durchgangsloch (19) und/oder des Diffusoranteils (15) mit Pulsdauern im Nanosekundenbereich oder Subnanosekundenbereich,
insbesondere kleiner gleich 800ns,
ganz insbesondere kleiner gleich 600ns,
erfolgt.

12. Verfahren nach einem oder mehreren der vorherigen Ansprüche,
bei dem eine Entfernung von Material aus dem Durchgangsloch (18') nach der Beschichtung mit der inneren metallischen Schicht (7") und vor der Beschichtung mit keramischem Material für die keramische Schicht (10") erfolgt.

## Geänderte Patentansprüche

### Geänderte Patentansprüche gemäss Regel 137(2) EPÜ.

1. Verfahren
zur Neuherstellung von Durchgangslöchern (18') in ein Schichtsystem aus metallischem Substrat (4) und zumindest einer Schicht (7'', 10''),
insbesondere von Durchgangslöchern (18') mit einem äußeren Diffusor (13),
bei dem zuerst das Substrat (4) hergestellt wird, insbesondere gegossen wird,
dann in das Substrat (4) vor der ersten Beschichtung zumindest ein Durchgangsloch (18) mit einem Querschnitt, insbesondere mit einem konstantem Querschnitt über die gesamte Dicke des Substrats (4),
eingebracht wird,
dass optional eine Materialbestrahlung,
insbesondere Sandstrahlen oder Kugelstrahlen,
durchgeführt wird,
Scannen und Abspeichern eines Lochmusters der Durchgangslöcher (18) in einem ersten Scan mittels einer Scanvorrichtung (30),
bei dem das Substrat (4) erst dann beschichtet wird mit einer inneren metallischen Schicht (7'') und/oder einer äußeren keramischen Schicht (10''),
optionales Entfernen von insbesondere metallischem Material aus dem Durchgangsloch (19) im Substrat (4) vor dem Aufbringen der keramischen Schicht (10''),
Scannen und Abspeichern eines Lochmusters der beschichteten Durchgangslöcher (19) in einem zweiten Scan,
wobei aufgrund des ersten Scans und des zweiten Scans die Durchgangslöcher (18) identifiziert werden und/oder auch die Ausrichtung und Lage der Durchgangslöcher (18) bestimmt wird,
wobei die Ausrichtung und Lage der Durchgangslöcher (18) optional durch ein separates Messverfahren erfolgen kann, dass dann zumindest keramisches Material aus dem Durchgangsloch (18) entfernt wird zur Fertigstellung des zumin-dest einen Durchgangslochs (18'),
in einem weiteren Bearbeitungsschritt oder in dem selben Arbeitsgang ein Diffusor (13) in die Schichten (7'', 10'') und optional ein Diffusoranteil (15) in das Substrat (4) zur Fertigstellung des zumindest einen Durchgangslochs (18') mit Diffusor (13).

2. Verfahren nach Anspruch 1,
bei dem ein Durchgangsloch (18') ohne Diffusor erzeugt wird,
insbesondere ein zylindrisches Durchgangsloch (18').

3. Verfahren nach Anspruch 1,
bei dem ein Diffusor (13) erzeugt wird.

4. Verfahren nach einem oder mehreren der Ansprüche 1, 2 oder 3,
bei dem die Entfernung von Material aus dem Durchgangsloch (19) im Substrat (4) vor dem zweiten Scan erfolgt.

5. Verfahren nach Anspruch 4,
bei dem das Entfernen von Material manuell erfolgt.

6. Verfahren nach einem oder mehreren der Ansprüche 1, 3, 4 oder 5,
wobei erstmalig für den Diffusor (13) zusätzliches Material in einem Diffusoranteil (15) des Substrats (4) entfernt wird,
wobei der Diffusoranteil (15) eine Verbreiterung des Durchgangslochs (18') an der Oberfläche (16') des Substrats (4) darstellt,
und insbesondere wobei der Diffusor (13) eine unsymmetrische Verbreiterung des oberen Teils des Durchgangslochs (18') darstellt.

7. Verfahren nach einem oder mehreren der Ansprüche 1, 2, 3, 4, 5 oder 6,
bei dem ein metallisches Substrat (4) bearbeitet wird.

8. Verfahren nach einem oder mehreren der Ansprüche 1, 2, 3, 4, 5, 6 oder 7,
bei dem zumindest eine innere metallische Schicht (7'') vorhanden ist.

9. Verfahren nach einem oder mehreren der Ansprüche 1, 2, 3, 4, 5, 6, 7 oder 8,
bei dem ein Laserabtragungsverfahren verwendet wird, insbesondere unter Verwendung von deutlich unterschiedlichen,
insbesondere mindestens 20% unterschiedlichen Pulsfrequenzen für die Herstellung des Durchgangslochs (18') und des Diffusors (13) oder der Entfernung von keramischen Material aus dem Durchgangsloch (18').

10. Verfahren nach einem oder mehreren der vorherigen An-sprüche 1, 2, 3, 4, 5, 6, 7, 8 oder 9,
bei dem das Durchgangsloch (18') mit Pulsdauern im Millisekundenbereich hergestellt wird,
insbesondere größer gleich 1ms.

11. Verfahren nach einem oder mehreren der vorherigen Ansprüche 1 oder 3 bis 10,
bei dem der Diffusor (13) oder zumindest die Entfernung von keramischem Material aus dem Durchgangsloch (19) und/oder des Diffusoranteils (15) mit Pulsdauern im Nanosekundenbereich oder Subnanosekundenbereich,
insbesondere kleiner gleich 800ns,
ganz insbesondere kleiner gleich 600ns,
erfolgt.

12. Verfahren nach einem oder mehreren der vorherigen Ansprüche,
bei dem eine Entfernung von Material aus dem Durchgangsloch (18') nach der Beschichtung mit der inneren metallischen Schicht (7'') und vor der Beschichtung mit keramischem Material für die keramische Schicht (10'') erfolgt.
